# EUROPÄISCHE PATENTSCHRIFT

(11) **EP 0 429 862 B1**
(45) Veröffentlichungstag und Bekanntmachung des Hinweises auf die Patenterteilung: **08.12.1993**
(21) Anmeldenummer: 90120621.9
(22) Anmeldetag: 27.10.1990
(51) Int. Cl.: B29C 47/22, B29C 47/92

(54) **Zentriervorrichtung für einen Rohrextrusionskopf**
Centering apparatus for a tube extruder head
Dispositif de centrage d'une tête d'extrusion de tube

(30) Priorität: 02.11.1989 DE 3936496
(43) Veröffentlichungstag der Anmeldung: 05.06.1991
(73) Patentinhaber: Krauss-Maffei Aktiengesellschaft, 80997 München (DE)
(72) Erfinder: Reiber, Erwin, Dipl.-Ing. (FH), W-8047 Karlsfeld (DE); Walter, Wolfgang, Dipl.-Ing. (FH), W-8000 München 50 (DE)

(56) Entgegenhaltungen:
- EP-A- 0 032 715
- DE-A- 3 445 066
- FR-A- 2 302 188
- PATENT ABSTRACTS OF JAPAN, Band 9, Nr. 67 (M-366)[1790], 27. März 1985; & JP-A-59 199 220 (EKUSERU K.K.) 12-11-1984

## Beschreibung

Die Erfindung betrifft eine Zentriervorrichtung für einen Rohrextrusionskopf von der im Oberbegriff des Anspruchs 1 angegebenen Art.

Beim Extrudieren von Rohren und Schläuchen aus Kunststoff müssen die den ringförmigen Düsenspalt bildenden Teile, nämlich Dorn und Mundstück bzw. Düse so exakt zueinander zentriert werden, daß eine um den Umfang gleichmäßige Wanddicke des extrudierten Rohres gewährleistet ist. Trotz optimal gleichmäßig eingestelltem Düsenspalt können aber instationäre Wanddickenunterschiede auftreten, die z.B. durch Temperaturunterschiede im Extrusionskopf, Unterschiede der Materialzusammensetzung und des Gleitverhaltens der Kunststoffschmelze u. dgl. verursacht werden können. Diese Dickenschwankungen dürfen auf keinen Fall dazu führen, daß an einer Stelle die durch Norm festgelegte untere Toleranzgrenze unterschritten wird. Der Extrusionskopf muß deshalb während des Betriebes anhand von am Produkt vorgenommenen Dickenmessungen nachzentriert werden. Je genauer und verzögerungsfreier eine solche Nachzentrierung bei auftretenden Wanddickenunterschieden erfolgen können, desto gefahrloser ist es möglich, den Extrusionsprozeß materialsparend mit einer nahe der unteren Toleranzgrenze liegenden Wanddicke zu fahren.

Übliche Rohrextrusionsköpfe weisen zur radialen Zentrierung der Düse eine Anzahl radial gerichteter Zentrierschrauben auf, die von Hand mit einem Schraubwerkzeug entsprechend der gewünschten Zentrierung betätigt werden. Als Kriterium dient die ebenfalls von Hand gemessene Wanddickenverteilung des fertigen, bereits erkalteten Produktes. Auftretende Dickenschwankungen können hiermit aber nur sehr ungenau und mit großer Verzögerung berücksichtigt werden.

Aus DE-GM 87 04 664 sowie aus "Kunststoffe 73 (1983)", S. 8 sind bereits Einrichtungen zur automatischen Rohrkopfzentrierung bekannt, bei denen Antriebseinrichtungen zur radialen Verstellung der Düse vorgesehen sind, die in Abhängigkeit von einem Dickenmeßgerät betätigt werden können. Hiermit soll eine Zentrierung in Abhängigkeit von gemessenen Dickenabweichungen vollautomatisch in einem geschlossenen Regelkreis durchgeführt werden können. Die vorbekannten Einrichtungen haben aber einerseits den Nachteil, daß besonders ausgebildete, mit den entsprechenden Zentrier-Stellvorrichtungen versehene Extrusionsdüsen verwendet werden müssen. Die Vorrichtung ist nicht bei konventionellen, mit radialen Zentrierschrauben versehenen Extrusionsdüsen verwendbar oder nachrüstbar. Ferner ist bei diesen bekannten Vorrichtungen nichts über die Art und Anbringung des verwendeten Wanddickenmeßgerätes und sein Zusammenwirken mit den Stellantrieben für die Zentrierung entnehmbar.

Aus FR-A- 2 302 188 ist eine Zentriervorrichtung der eingangs genannten Art bekannt. Bei ihr steuern von einem Rechner in Abhängigkeit der Waddickenmessung erzeugte Rechen- und Steuersignale einerseits den Betrag der Schraubbewegung an jeder einzelnen Zentrierschraube und andererseits die Abzugsgeschwindigkeit des extrudierten Rohres. Mit jeder Zentrierschraube kann ein eigenes, rechnergesteuertes Schraubwerkzeug permanent gekoppelt sein, oder es kann ein einziges Schraubwerkzeug vorgesehen sein, das nacheinander mit den einzelnen Zentrierschrauben gekoppelt werden kann. Darüber, wie diese Ankopplung des Schraubwerkzeuges an die Zentrierschrauben durchgeführt, angetrieben und gesteuert wird, ist in dem Dokument nichts ausgesagt. Da das Ankoppeln aber sukzessive, d.h. in festgelegter Reihenfolge geschieht, kann beim Auftreten einer Exzentrizität eine beträchtliche Zeit vergehen, bis das Schraubwerkzeug diejenige Zentrierschraube erreicht hat, deren Winkelorientierung der Exzentrizität entspricht und an der die Korrektur der Exzentrizität hauptsächlich durchzuführen ist. Diese Vorrichtung ist deshalb zum raschen Nachregeln von Exzentrizitäten nicht optimal geeignet.

Der Erfindung liegt die Aufgabe zugrunde, eine Vorrichtung der eingangs genannten Art zu schaffen, die bei Rohrextrusionsdüsen mit den üblichen radialen Zentrierschrauben eine vollautomatische Nachzentrierung und Nachregelung von Exzentrizitäten in Abhängigkeit von einer laufend durchgeführten Messung der Wanddickenverteilung ermöglicht.

Die Lösung der Aufgabe ist im Anspruch 1 angegeben. Die Unteransprüche beziehen sich auf vorteilhafte weitere Ausgestaltungen der Erfindung.

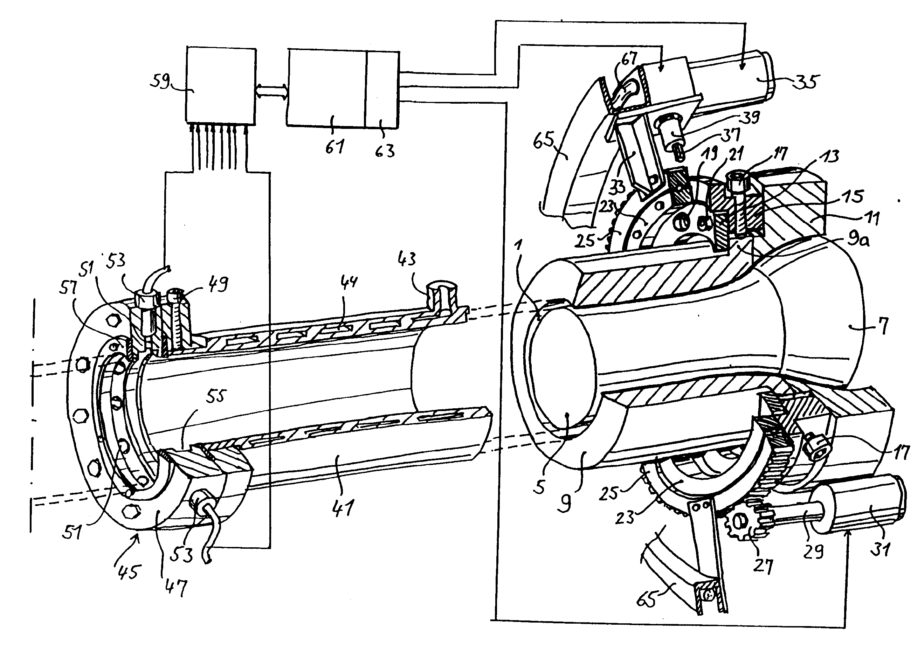

Eine Ausführungsform der Erfindung wird anhand der Zeichnung erläutert, die in vereinfachter schematischer Perspektivdarstellung einen mit der erfindungsgemäßen Zentriervorrichtung ausgerüsteten Rohrextrusionskopf mit anschließender Kalibrierhülse darstellt.

Der ringförmige Düsenspalt 1 zum Extrudieren des (gestrichelt angedeuteten) Rohres 3 wird gebildet von dem Dorn 5, der an einem Dornhalter 7 mit (nicht dargestellten) Befestigungsmitteln befestigt ist, und der den Dorn 5 umgeben den Düse 9, die an einem Düsenhalter 11 radial verschieblich befestigt ist, und zwar mittels eines Spannringes 13, der vor eine Ringschulter 9a der Düse 9 greift und diese gegen die vordere Stirnfläche des Düsenhalters 11 andrückt. Zwischen Spannring 13 und Düsenhalter 11 befindet sich ein Zentrierring 15, der eine Anzahl, z.B.acht, am Umfang verteilte radiale Gewindebohrungen aufweist, in die Zentrierschrauben 17 eingeschraubt sind, die zentrierend gegen die Umfangsfläche der Ringschulter 9a der Düse 9 anliegen. Die Zentrierschrauben 17 können mit einem geeigneten Werkzeug, z.B. einem Innensechskantschlüssel, von Hand verstellt werden, um die Zentrierung der Düse 9 relativ zum Dorn 5 zu verändern. Der Zentrierring 15 ist am Düsenhalter 11 mit Schrauben 19 befestigt, die durch Bohrungen im Spannring 13 zugänglich sind, während der Spannring 13 am Zentrierring 15 mit Schrauben 25 befestigt ist. Auf diese Weise ist es möglich, den Spannring 13 zu lösen und die Düse 9 auszuwechseln, ohne daß der Zentrierring 15 vom Düsenhalter 11 abgenommen werden muß.

Am Zentrierring 15 ist ein Lagerring 23 befestigt, auf dem ein Zahnkranz 25 mittels Kugellagerung drehbar gelagert ist. Der Zahnkranz 25 steht mit einem Ritzel 27 in Eingriff, dessen Welle 29 von einem Stellmotor 31 drehbar ist.

Am Zahnkranz 25 ist mit einer Konsole 33 ein mit einem Motor 35 antreibbares Schraubwerkzeug 37 gelagert, das mit einer antreibbaren Axialspindel 39 in Radialrichung der Extrusionsdüse verstellt werden kann. Durch aufeinanderfolgende Drehungen des Zahnkranzes 25 und Betätigungen der Axialspindel 39 kann das Schraubwerkzeug 37 nacheinander mit jeder einzelnen der Zentrierschrauben 17 in Eingriff gebracht werden.

Das extrudierte Rohr 3 läuft unmittelbar nach Verlassen des Extrusionsspaltes 1 in eine Kalibrierhülse 41, die mit einem Kühlmittel gekühlt ist, welches bei 43 zugeführt wird und Kühlmittelkanäle 44 in der Kalibrierhülse 41 durchströmt. Die Kalibrierhülse 41 ist üblicherweise in einem (nicht dargestellten) Vakuumtank angeordnet, und das Rohr wird durch seinen atmosphärischen Innendruck gegen die Innenwandung der Kalibrierhülse 41 angedrückt und dadurch während seiner ersten Abkühlphase auf einen kalibrierten Außendurchmesser eingestellt. An die Kalibrierhülse 41 schließt sich normalerweise eine längere Kühlstrecke an.

Am Ende der Kalibrierhülse 41, und damit innerhalb des (nicht dargestellten) Vakuumtanks und in relativ kurzem Abstand von der Extrusionsdüse, ist ein Dickenmeßgerät 45 angeordnet. Dieses besteht aus einem ringförmigen Halter 47, der auf das Ende der Kalibrierhülse 41 aufgeschoben und durch radiale Schrauben 49 befestigt ist. In dem Halter 47 sind an mehreren, z.B.acht, um den Umfang verteilten Stellen radiale Ausnehmungen 51 angebracht, in denen Ultraschallsensoren 53 angeordnet sind. Der Schallübertragungskontakt zwischen den Sensoren 53 und dem Rohr 3 kann durch ein flüssiges Medium, z.B. Wasser, hergestellt werden, welches in eine ringförmige Ausnehmung 55 an der Innenseite des Halters 47 zugeführt wird. Beiderseits der Ausnehmung 55 liegen am Halter 47 befestigte Dichtringe 57 abdichtend gegen die Außenfläche des Rohres 3 an, um den Austritt des flüssigen Mediums zu verhindern.

Die Ausgänge der Ultraschallsensoren 53 sind an ein Meßgerät 59 angeschlossen, welches aus den von den Sensoren 53 erzeugten Echosignalen die Wanddicke des Rohres 3 ermittelt. Die Abfrage der Meßsignale von den Sensoren 53 kann gleichzeitig parallel oder zyklisch nacheinander erfolgen. Die Meßwerte werden einem entsprechend vorprogrammierten Rechner 61 zugeführt und ausgewertet. Ergibt die Auswertung eine die Toleranzgrenze übersteigende Ungleichheit der Wanddicke über den Umfang des Rohres 3, so erzeugt der Rechner 61 über ein Steuerteil 63 Steuersignale für den Ritzelmotor 31 und die Axialspindel 39, um durch nacheinander durchgeführte Stellbewegungen das Schraubwerkzeug 37 in Eingriff mit den einzelnen Zentrierschrauben 17 zu bringen. Gleichzeitig werden Steuersignale für den Antriebsmotor 35 des Schraubwerkzeugs 37 erzeugt. Auf diese Weise kann durch computergesteuertes Lösen und Festziehen der Zentrierschrauben 17 die Düse 1 derart radial verstellt werden, daß die Dickenabweichungen des Rohres 3 kompensiert und stets eine gleichförmige Wanddicke eingehalten wird. Der Algorithmus, mit dem aus der gemessenen Wanddickenverteilung die Richtung und der Betrag der Verstellung der Düse 9,und hieraus die erforderlichen Stellbewegungen und Drehbewegungen des Schraubwerkzeugs 37 ermittelt werden,ist in der Rechenvorrichtung 61 vorprogrammiert.

Mit der erfindungsgemäßen Vorrichtung ist ein kontinuierliches Nachregeln der Zentrierung der Düse 9 in einer geschlossenen Regelschleife möglich. Da die Wanddicke bereits unmittelbar an der Kalibrierhülse 41, und damit in dem technisch geringstmöglichen Abstand von dem Extrusionskopf gemessen wird, ergeben sich geringe Reaktionszeiten des Regelkreises. Bei den bisher bekannten Vorrichtungen wird die Wanddicke erst am erkalteten Rohr beim Verlassen der Kühlstrecke gemessen, also an einer Stelle, die vom extrudierten Rohr möglicherweise erst nach einer Abkühlzeit von mehr als einer Stunde erreicht wird. Die erfindungsgemäße Zentriervorrichtung eignet sich zur Nachrüstung an vorhandenen Extrusionsköpfen, die mit den üblichen radialen Zentrierschrauben 17 ausgerüstet sind. Die einzige Änderung, die hierzu am Extrusionskopf vorgenommen werden muß, besteht darin, den Zentrierring 15 mit daran gelagertem Zahnkranz 25 und Werkzeugeinheit gegen den vorhandenen Zentrierring auszutauschen. Ferner ist das Dickenmeßgerät 45 an der Kalibrierhülse 41 zu befestigen.

Der Rechner 61 kann so programmiert werden, daß bei jeder Neueinstellung der Zentrierschrauben 17 diese auf ein jeweils vorgegebenes konstantes Anzugsdrehmoment festgeschraubt werden.

Bei der beschriebenen Aüsfuhrungsform mißt das Dickenmeßgerät 45 die Wanddicke des Rohres an z.B. 8 um den Umfang verteilten Stellen, wobei diese Stellen den Zentrierschrauben 17 zugeordnet sein können, aber nicht müssen. In Abänderung der Ausführungsform kann das Dickenmeßgerät 45 auch drehbar gelagert sein und oszillierende Drehbewegungen ausführen, so daß die Wanddicke auf dem gesamten Umfang ermittelt werden kann. Statt Ultraschallsensoren können auch andere, dem Fachmann bekannte Wanddicken-Meßgeräte verwendet werden.

Bei einer vereinfachten Ausführungsform der Erfindung können anstelle eines einzigen, verstellbaren Schraubwerkzeuges 37 mehrere Schraubwerkzeuge vorgesehen sein, insbesondere kann jeder Zentrierschraube 17 ein eigenes angetriebenes Schraubwerkzeug zugeordnet sein und ständig mit der Zentrierschraube in Eingriff stehen, so daß die azimutalen Stellbewegungen entfallen. Der Rechner 61 braucht in diesem Fall lediglich die Steuerbefehle für die Antriebsmotoren der verschiedenen Schraubwerkzeuge zu liefern.

Bei der beschriebenen Ausführungsform ist am Zahnkranz 35 über die Konsole 33 und ggf. weitere Streben ein Führungsring 65 gelagert, der zur Aufnahme des elektrischen und/oder pneumatischen Zuleitungskabels 67 zum Schraubwerkzeug 37 dienen kann und gleichzeitig als unfallverhütende Abschirmung der gesamten Zentriervorrichtung dient.

Die Erfindung ist nicht auf die konstruktiven Einzelheiten der dargestellten Ausführungsform beschränkt. So kann z.B. die Kühlung der Kalibrierhülse 41 mittels der Kühlmittelkanäle 44 entfallen. Stattdessen kann die Kalibrierhülse mit geeignet angeordneten Öffnungen oder Schlitzen versehen sein, die eine direkte Verbindung zwischen der Oberfläche des Rohres 3 durch die Wandung der Kalibrierhülse hindurch mit dem die Kalibrierhülse umgebenden Vakuumtank (nicht dargestellt) herstellen. Es können z.B. zahlreiche in Umfangsrichtung verlaufende bogenförmige Schlitze so angeordnet sein, daß sie in axialen Abständen und in Winkelabständen gleichmäßig über die Umfangsfläche der Kalibrierhülse verteilt sind.

## Patentansprüche

1. Zentriervorrichtung für einen Rohrextrusionskopf, dessen ringförmige Düse (9) in ihrer Radialebene verschiebbar gehaltert und durch eine Anzahl am Umfang verteilter Zentrierschrauben (17) relativ zum Dorn (5) zentrierbar ist, mit einer am Rohrextrusionskopf befestigten Schraubvorrichtung mit einem motorisch angetriebenen Schraubwerkzeug (37), das beweglich gelagert und mit.jeder der Zentrierschrauben (17) in Eingriff bringbar ist,
einer im Weg des extrudierten Rohres (3) angeordneten Dikkenmeßvorrichtung (45, 59) zum Messen der Wanddicke des extrudierten Rohres an mehreren um dessen Umfang verteilten Stellen,
und einem vorprogrammierten Rechen- und Steuergerät (61, 63), das durch Auswerten der Meßsignale der Dickenmeßvorrichtung (45, 59) Steuersignale für das Schraubwerkzeug (37) erzeugt, durch die die von dem Schraubwerkzeug an der jeweils in Eingriff befindlichen Zentrierschraube durchzuführenden Schraubbewegungen derart steuerbar sind, daß durch Lösen oder Festziehen der Zentrierschrauben (17) die Zentrierung der Düse (9) zum Ausgleich der von der Dickenmeßvorrichtung gemessenen Wanddickenunterschiede geändert wird,
dadurch **gekennzeichnet,**
daß das Schraubwerkzeug (37) an einer Halterung (23, 25) derart beweglich gelagert ist, daß es Stellbewegungen in Umfangsrichtung und Radialrichtung des Rohrextrusionskopfes für den wahlweisen Eingriff mit jeweils einer Zentrierschraube (17) ausführen kann,
daß Stellantriebe (31, 39) zur Durchführung der Stellbewegung des Schraubwerkzeuges (37) in Radial- und Umfangsrichtung vorgesehen sind,
und daß die Stellantriebe (31, 39) durch von dem Rechen- und Steuergerät (61, 63) in Abhängigkeit von der Auswertung der Meßsignale der Dickenmeßvorrichtung (45, 59) erzeugte Steuerbefehle steuerbar sind.

2. Vorrichtung nach Anspruch 1, dadurch **gekenn****zeichnet**, daß die Halterung einen konzentrisch zum Kopf drehbar gelagerten Zahnkranz (25) aufweist, an dem das Schraubwerkzeug (37) radial verstellbar gelagert ist, und daß als Stellantrieb einerseits ein mit dem Zahnkranz (25) in Eingriff stehendes Ritzel (37) mit Ritzelmotor (31) zum Drehen des Zahnkranzes (25) und andererseits eine motorisch angetriebene Stellspindel (39) zum radialen Verstellen des Schraubwerkzeugs (37) vorgesehen sind.

3. Vorrichtung nach Anspruch 1, dadurch **gekennzeichnet,** daß die Schraubvorrichtung als eine nachträglich am Extrusionskopf montierbare Einheit ausgebildet ist.

4. Vorrichtung nach Anspruch 1, dadurch **gekennzeichnet,** daß die Meßvorrichtung eine Anzahl Sensoren (53) aufweist, die an einer konzentrisch zum extrudierten Rohr angeordneten Halterung (47) in Winkelabständen befestigt sind.

5. Vorrichtung nach Anspruch 4, dadurch **gekennzeichnet,** daß die Sensoren (53) als Ultraschallsensoren ausgebildet sind.

6. Vorrichtung nach Anspruch 5, dadurch **gekennzeichnet,** daß die Meßvorrichtung Einrichtungen zum Zuführen und Abdichten eines flüssigen Mediums zwischen den Meßköpfen (53) und der Außenfläche des Rohres aufweist.

7. Vorrichtung nach Anspruch 1, dadurch **gekennzeichnet,** daß die Meßvorrichtung zu oszillierenden Drehbewegungen um die Rohrachse antreibbar ist.

## Claims

1. Centering apparatus for a pipe extrusion head, whereof the annular nozzle (9) is mounted to be displaceable in its radial plane and can be centered relative to the mandrel (5) by a number of centering screws (17) distributed on the periphery, with a screwing device attached to the pipe extrusion head and having a motorised screwing tool (37), which is mounted to move and can be brought into engagement with each of the centering screws (17), a thickness measuring device (45, 49) located in the path of the extruded pipe (3), for measuring the wall thickness of the extruded pipe at several points distributed over its periphery and a pre-programmed computer and control unit (61, 63), which due to evaluation of the measuring signals of the thickness-measuring device (45, 59) produces control signals for the screwing tool (37), by which the screwing movements to be carried out by the screwing tool on the centering screw located respectively in engagement can be controlled so that by releasing or tightening the centering screws (17), the centering of the nozzle (9) is altered for equalizing the wall thickness differences measured by the thickness-measuring device, characterised in that the screwing tool (37) is mounted to move on a mounting support (23, 25) so that it is able to carry out adjusting movements in the peripheral direction and radial direction of the pipe extrusion head for selective engagement with respectively one centering screw (17), that servo drives (31, 39) are provided for carrying out the adjusting movement of the screwing tool (37) in the radial and peripheral direction and that the servo drives (31, 39) can be controlled by control commands produced by the computer and control unit (61, 63) depending on the evaluation of the measurement signals of the thickness-measuring device (45, 59).

2. Apparatus according to Claim 1, characterised in that the mounting support comprises a toothed rim (25) mounted to rotate concentrically with respect to the head, on which toothed rim the screwing tool (37) is mounted to be radially adjustable and that provided as a servo drive on one side is a pinion (37) meshing with the toothed rim (25), having a pinion motor (31) for rotating the toothed rim (25) and on the other side a motorised adjusting spindle (39) for the radial adjustment of the screwing tool (37).

3. Apparatus according to Claim 1, characterised in that the screwing device is constructed as a unit able to be mounted subsequently on the extrusion head.

4. Apparatus according to Claim 1, characterised in that the measuring device comprises a number of sensors (53), which are attached at angular intervals on a mounting support (47) arranged concentrically with respect to the extruded pipe.

5. Apparatus according to Claim 4, characterised in that the sensors (53) are constructed as ultrasound sensors.

6. Apparatus according to Claim 5, characterised in that the measuring device comprises arrangements for supplying and sealing a liquid medium between the measuring heads (53) and the outer surface of the pipe.

7. Apparatus according to Claim 1, characterised in that the measuring device can be set in oscillating rotary movements about the axis of the pipe.

## Revendications

1. Dispositif de centrage, destiné à une tête d'extrusion de tube, et dont la buse annulaire (9) est montée de manière à pouvoir être déplacée en translation dans son plan radial et est susceptible d'être centrée par rapport au mandrin (5) au moyen d'un certain nombre de vis de centrage (17) réparties sur la périphérie, ce dispositif comportant un dispositif de vissage fixé à la tête d'extrusion de tube, doté d'un outil de vissage (37) entraîné par moteur, lequel outil de vissage est monté de façon mobile et peut être mis en prise avec chacune des vis de centrage (17), un dispositif (45, 49) de mesure d'épaisseur, destiné à la mesure de l'épaisseur de paroi du tube extrudé, en plusieurs emplacements répartis sur la périphérie de ce tube, et un ordinateur ou appareil de calcul et de commande (61, 63), qui produit, par exploitation des signaux de mesure du dispositif de mesure d'épaisseur, des signaux (45, 49) de commande destinés à l'outil de vissage (37), grâce auxquels les déplacements de vissage,qui doivent être exécutés par l'outil de vissage sur la vis de centrage avec laquelle il est en prise au moment considéré, peuvent être commandés de façon telle qu'en dévissant ou en vissant les vis de centrage (17) le centrage de la buse (9) est modifié pour compenser les variations d'épaisseur mesurées par le dispositif de mesure d'épaisseur, caractérisé en ce que l'outil de vissage (37) est monté mobile sur un support (23, 25) de manière à pouvoir exécuter des déplacements de changement de position dans le sens périphérique et dans le sens radial de la tête d'extrusion de tube pour pouvoir être à volonté mis en prise avec une vis de centrage (17) considérée, en ce que des entrainements (31, 39) de changement de position sont prévus pour l'exécution des déplacements de changement de position de l'outil de vissage (37) dans le sens radial et dans le sens périphérique, et en ce que les entrainements de changement de position (31, 39) peuvent être commandés par des ordres de commande émis par l'ordinateur, appareil de calcul et de commande (61, 63),en fonction de l'exploitation des signaux de mesure du dispositif (45, 49) de mesure d'épaisseur.

2. Dispositif selon la revendication 1, caractérisé en ce que le support présente une couronne dentée (25) montée de façon rotative concentriquement à la tête et sur laquelle est monté, de façon réglable radialement, l'outil de vissage (37) et en ce que l'on prévoit comme organe d'entraînement de réglage, d'une part un pignon (37) en prise avec la couronne dentée (25), avec un moteur (31) de pignon, destiné à faire tourner la couronne dentée, et d'autre part une vis de réglage (39) entraînée par moteur pour le déplacement radial de l'outil de vissage (37).

3. Dispositif selon la revendication 1, caractérisé en ce que le dispositif de vissage peut être conformé en une unité susceptible d'être rapportée ultérieurement sur la tête d'extrusion.

4. Dispositif selon la revendication 1, caractérisé en ce que le dispositif de mesure présente un certain nombre de capteurs (53),qui sont fixés avec certains écarts angulaires sur un support (47) disposé concentriquement au tube extrudé.

5. Dispositif selon la revendication 4, caractérisé en ce que les capteurs (53) ont une conformation de capteurs à ultrasons.

6. Dispositif selon la revendication 5, caractérisé en ce que le dispositif de mesure présente des organes pour acheminer un milieu fluide, et en assurer l'étanchéité, entre les têtes (53) de mesure et la surface extérieure du tube.

7. Dispositif selon la revendication 1, caractérisé en ce que le dispositif de mesure peut être entraîné de manière à exécuter des mouvements oscillatoires de rotation autour de l'axe (géométrique) du tube.
